# EUROPÄISCHE PATENTSCHRIFT

(11) **EP 0 782 414 B1**
(45) Veröffentlichungstag und Bekanntmachung des Hinweises auf die Patenterteilung: **05.06.2002**
(21) Anmeldenummer: 95934642.0
(22) Anmeldetag: 25.09.1995
(51) Int. Cl.: A61C 7/12

(54) **VORRICHTUNG ZUM REGULIEREN DER ZAHNSTELLUNG**
DEVICE FOR ADJUSTING THE POSITION OF A TOOTH
DISPOSITIF DE REDRESSEMENT DE LA POSITION D'UNE DENT

(30) Priorität: 24.09.1994 DE 4434209
(43) Veröffentlichungstag der Anmeldung: 09.07.1997
(73) Patentinhaber: Bernhard Förster GmbH, 75172 Pforzheim (DE)
(72) Erfinder: Förster, Rolf, 75173 Pforzheim (DE)
(74) Vertreter: Twelmeier, Ulrich, Dipl.Phys.
(86) Internationale Anmeldenummer: EP9503783
(87) Internationale Veröffentlichungsnummer: WO9609015

(56) Entgegenhaltungen:
- FR-A- 2 563 426
- US-A- 3 964 165
- US-A- 4 604 057
- US-A- 5 254 002
- US-A- 5 267 854

## Beschreibung

Die Erfindung geht aus von einer Vorrichtung mit den im Oberbegriff des Anspruchs 1 angegebenen Merkmalen. Solche Vorrichtungen sind bekannt aus der US 4,604,057 A. Aus dem DE-U-93 08 153 bekannte Brackets dienen dazu, Spanndrähte (arch wires) aufzunehmen und zu führen und durch deren mechanische Spannung ausgeübte Kräfte auf den Zahn zu übertragen. Zu diesem Zweck bestehen sie aus einem Fußteil (Pad), welches eine konkave Unterseite zum Aufkleben auf die Vorderseite eines Zahnes hat, und aus einem auf der Oberseite des Pads stehenden Aufnahme- und Führungsteil für den Spanndraht. Das Pad wird mit seiner Unterseite auf die Vorderseite des Zahnes geklebt. Damit die vom Spanndraht ausgeübten Kräfte in den Zahn eingeleitet werden können, muss die Klebeverbindung fest und dauerhaft sein. Bei den zumeist aus Edelstahl bestehenden Regulierungsvorrichtungen ist die Unterseite des Pads zu diesem Zweck mit einem Drahtgeflecht versehen, wodurch das Pad nicht nur eine Klebeverbindung mit dem Klebstoff eingeht, sondern sich mit dem Klebstoff mechanisch verzahnt. Aus der US-5,267,854 A ist ein metallisches Bracket bekannt, welches pulvermetallurgisch hergestellt wird, indem mit Hilfe eines Vielfachformwerkzeuges Rohlinge gepreßt, entformt und dann durch Sintern verfestigt werden. Die so hergestellten Brackets haben an der Unterseite des Pads stäbchenförmige Vorsprünge, die sich schwach konisch verjüngen, damit sie entformt werden können. Nach dem Sintern werden die Vorsprünge durch Einwirkung eines Preßstempels gestaucht, so dass sie eine pilzförmige Gestalt erhalten. Durch die pilzförmige Gestalt können sie sich mit dem Klebstoff, mit dem sie auf Zähne aufgeklebt werden, verzahnen. Die Herstellung dieser bekannten Brackets ist verhältnismässig aufwendig, zumal für den Preßstempel, der die Vorsprünge umformt, ein Widerlager benötigt wird, welches der Kontur des Aufnahme- und Führungsteils des Brackets angepaßt ist.

Hinzu kommt, dass Brackets aus Edelstahl Nickel enthalten. Im Hinblick auf Berichte über Kontaktallergien, die Nickel angeblich verursachen können, gibt es Bestrebungen, die Regulierungsvorrichtungen aus Werkstoffen herzustellen, die keinerlei Nickel enthalten. Derzeit ist Titan der einzige bekannte metallische Werkstoff, der in der medizinischen Technik verwendet werden kann, ohne allergische Reaktionen zu verursachen. Titan ist jedoch verhältnismäßig schwer zu verarbeiten.

Bekannt sind auch keramische Brackets; sie bewirken keine allergische Reaktionen, sind aber von Natur aus verhältnismäßig spröde und daher bruchgefährdet.

Bekannt sind auch Brackets aus thermoplastischem Kunststoff, nämlich aus glasklarem Polycarbonat. Sie wurden ursprünglich entwickelt, weil sie im Mund weniger auffallen als metallische Brackets. Polycarbonat wird von den Klebstoffen, mit denen solche Brackets auf die Zähne geklebt werden, angelöst, so daß es auf chemischem Wege zu einem festen Verbund zwischen Klebstoff und Pad kommt, der eine mechanische Verzahnung zwischen Pad und Klebstoff entbehrlich macht. Brackets aus Polycarbonat können deshalb eine glatte Padunterseite haben was für das Entformen nach dem Spritzgießen günstig ist. Brackets aus Polycarbonat werden zunehmend als Ersatz für Edelstahlbrackets eingesetzt, weil sie nickelfrei sind. Leider läßt die mechanische Festigkeit und damit die Haltbarkeit und Formstabilität von Brackets aus Polycarbonat zu wünschen übrig.

Aus der US 4,604,057 A bekannte Brackets haben an der Padunterseite beim Spritzgießen aus Kunststoff oder beim Druckgießen aus Metall geformte schräg verlaufende durch parallele Flächen begrenzte Ausnehmungen. Aus der US 5,254,002 A bekannte Kunststoffbrackets haben einen Schlitz, welcher durch einen metallischen Einsatz verstärkt ist, um die Spannkräfte eines Drahtbogens aufzunehmen. Aus der US 5,267,854 A sind Brackets bekannt, welche durch Metallspritzgießen mit stäbchenförmigen Fortsätzen an der Pad-Unterseite geformt werden. Diese Fortsätze werden anschließend durch Stauchen umgeformt um pilzförmige Köpfe zu bilden was bei Kunststoffbrackets nicht möglich wäre. Würde man das in der US 5,267,854 A für gesinterte metallische Brackets beschriebene Verfahren übertragen wollen auf das Formen von Kunststoffbrakkets durch Spritzgießen, dann würden sich zwar stäbchenförmige, sich schwach konisch verjüngende Vorsprünge an der Padunterseite durch Spritzgießen bilden und entformen lassen, doch wenn man sie in analoger Weise wie in der US 5,267,854 A mit Hilfe eines Druckstempels stauchen wollte, um ihnen eine pilzförmige Gestalt zu verleihen, dann wäre das mit einem kalten Stempel prinzipiell nicht möglich, sondern würde einen heißen Preßstempel erfordern, der aber dazu führen würde, daß die nur wenige Zehntel mm langen Vorsprünge praktisch sofort zusammenschmelzen würden und allenfalls eine etwas wellige Unterseite des Pads entstünde, auf der eine mechanische Verankerung mit dem Klebstoff nicht möglich wäre.

Die Verwendung eines Kunststoffes mit höherer Festigkeit ist aus technischen und wirtschaftlichen Gründen an eine Reihe von Voraussetzungen geknüpft:
- Der Kunststoff muss biologisch verträglich sein (Biokompatibilität).
- Der Kunststoff muss den im Mund erfolgenden chemischen Angriffen sowie den dort auftretenden mechanischen und thermischen Belastungen widerstehen.
- Er muss hinreichend formstabil, aber auch zäh sein.
- Er muss spritzgießfähig sein.

Der Erfinder hat herausgefunden, dass Kunststoffe, die diese Voraussetzungen erfüllen, Azetalharze, insbesondere Polyoximethylenhomopolymer (POM) sowie die Gruppe der Polyaryletherketone sind. Dabei handelt es sich um ein teilkristallines thermoplastisches Polykondensationsprodukt vom Polymertyp Poly(etherketonetherketonketon) mit folgender Struktur:

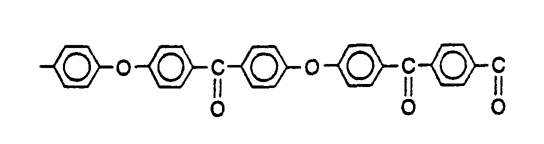

Die Polyaryletherketone (PAEK) haben für Zwecke der Erfindung sehr günstige Eigenschaften. Bereits unverstärktes PAEK besitzt eine ausgewogene Kombination von hoher Steifigkeit und Festigkeit bei guter Zähigkeit, hoher Wärmeformbeständigkeit und gutem Gleitreibverhalten. An Festigkeit und Steifigkeit übertrifft PAEK die meisten technischen Kunststoffe. Noch höhere Festigkeiten und Steifigkeiten lassen sich erzielen, wenn man PAEK verstärkt, insbesondere mit Glas- oder Kohlefaser. Darüberhinaus zeigt PAEK eine hervorragende Beständigkeit gegen Chemikalien; diese Beständigkeit hat allerdings auch einen Nachteil, denn er hat zur Folge, daß die ungiftigen und biologisch verträglichen Klebstoffe, die im Mund Verwendung finden können, nicht in der Lage sind, PAEK anzulösen. Brackets, die sich von Brackets aus Polycarbonat nur darin unterscheiden, daß ein Materialaustausch von Polycarbonat nach PAEK vorgenommen wurde, sind deshalb nicht verwendbar, weil sie sich nicht fest genug auf Zähne kleben lassen.

Der vorliegenden Erfindung liegt die Aufgabe zugrunde, Brackets zur Verfügung zu stellen, die sich preisgünstig herstellen lassen, eine hinreichende Zähigkeit und Festigkeit haben, um die von den Spanndrähten ausgeübte Retention für die Dauer einer Zahnkorrekturbehandlung auszuhalten, und die sich durch die in der Dentaltechnik üblichen und bewährten Klebstoffe auf die Zähne hinreichend fest und dauerhaft aufkleben lassen.

Diese Aufgabe wird gelöst durch Vorrichtungen zum Regulieren der Zahnstellung mit den im Anspruch 1 und im Anspruch 10 angegebenen Merkmalen sowie durch die Anwendung eines besonders geeigneten Spritzgießverfahrens zum Herstellen solcher Vorrichtungen mit den im Anspruch 20 angegebenen Merkmalen. Vorteilhafte Weiterbildungen der Erfindung sind Gegenstand der abhängigen Ansprüche.

Erfindungsgemäße Brackets und Bukkalröhrchen werden durch Spritzgießen aus Kunststoff oder anderen spritzgießfähigen Werkstoffen hergestellt und dabei an der Unterseite des Pads durch das Spritzgießen hinterschnitten geformte Vorsprünge oder Vertiefungen gebildet, welche in Reihen angeordnet sind und von Reihe zu Reihe unterschiedlich orientierte Hinterschnitte haben. Dadurch wird bei solchen Regulierungsvorrichtungen eine besonders wirksame und günstig herzustellende mechanische Verzahnung zwischen der Unterseite des Pads und dem Klebstoff, der das Pad mit dem Zahn verbindet, möglich. In Verbindung mit dem Formen von hinterschnittenen Vertiefungen und Vorsprüngen an der Padunterseite kann man gemäß der Erfindung insbesondere auch hochfeste und zähe, aber chemisch unerhört resistente Kunststoffe wie PAEK verwenden und daraus hergestellte Brackets und Bukkalröhrchen fest und dauerhaft auf die Zähne aufkleben. Im einschlägigen Stand der Technik gibt es keine Anregung, die Pads von Brackets und Bukkalröhrchen auf der Unterseite in der beanspruchten Weise auszubilden.

Überraschenderweise hat es sich gezeigt, daß sich Vorsprünge mit so winzigen Abmessungen, und Vertiefungen, wie sie an der Unterseite eines Pads erforderlich sind, trotz ihrer Winzigkeit so spritzen lassen, daß sie so, wie sie aus der Spritzgießform kommen, Hinterschnitte der beanspruchten Art haben, die eine wirksame mechanische Verzahnung mit einem in der Dentaltechnik gebräuchlichen Klebstoff eingehen. Durch die Erfindung werden mehrere Vorteile zugleich erreicht:
- Erfindungsgemäße Vorrichtungen zur Korrektur der Zahnstellung, nämlich Brackets und Bukkalröhrchen, können in einem einzigen Arbeitsgang durch Spritzgießen aus Kunststoff oder einem anderen spritzgießfähigen Werkstoff hergestellt werden. An der Unterseite des Pads sind darüberhinaus keinerlei Vorbehandlungen erforderlich, um die Teile auf die Zähne kleben zu können.
- Selbst Kunststoffe, die chemisch so unerhört resistent sind wie PAEK, können mit in der Dentaltechnik gebräuchlichen Klebstoffen fest und dauerhaft auf Zähne geklebt werden, so daß dieser bewährten KlebeTechnik jetzt auch so hochfeste und zähe Kunststoffe wie PAEK zugänglich sind.
- Da die Herstellung ausschließlich durch Spritzgießen erfolgt, ist eine sehr preisgünstige Fertigung möglich.
- PAEK hat von Natur aus eine hellgrau-beige Farbe, welche der natürlichen Zahnfarbe nahe kommt; da es darüberhinaus weniger Reflexionen zeigt als Polycarbonat, fallen Teile aus PAEK im Mund kaum auf.
- Falls gewünscht, kann PAEK durch helle Farbpigmente, welche vor dem Spritzgießen dem PAEK-Granulat beigemischt oder bereits bei der Herstellung des Granulats beigemischt werden, aufgehellt werden. Ein geeigneter Aufheller ist TiO₂-Pulver (Titanweiß).

Die Vorsprünge, die zweckmäßigerweise nicht mehr als 0,5 mm, vorzugsweise nicht mehr als 0,3 mm vorspringen, und die Vertiefungen, die ggfs. zweckmäßigerweise nicht tiefer als 0,5 mm, vorzugsweise nicht tiefer als 0,3 mm sind, sind zweckmäßigerweise in geraden, zueinander parallelen Reihen angeordnet, um in der Spritzgießform, in welcher die Teile gespritzt werden sollen, den Einsatz eines Systems von miniaturisierten Schiebern zu erleichtern, mit deren Hilfe Hinterschnitte geformt werden können. Soweit die Padunterseite in Richtung der Reihen nicht oder fast nicht gekrümmt ist, können mit parallel zur Padunterseite verlaufenden Schiebern T-förmige oder hakenförmige, insbesondere L-förmige Vorsprünge gespritzt werden. Hinterschnitte, die gebildet werden durch Schieber, die bezogen auf die Padunterseite schräg zur Senkrechten entriegelt werden, eignen sich besonders für schwer fließende Kleber, insbesondere Zwei-Komponentenkleber, weil diese leichter hinter solcherart gebildete Hinterschnitte fließen. Vorsprünge, die im senkrecht zur Unterseite des Pads gelegten Querschnitt trapezförmig oder rautenförmig sind, sowie Vertiefungen, kann man mit Schiebern bilden, die schräg zur Oberfläche des Pads verlaufen, und man kann dabei Hinterschnitte erzeugen, unabhängig von der Krümmung der Padoberfläche. Besonders bevorzugt ist dabei die Ausbildung von Vorsprüngen, die im senkrecht zur Unterseite des Pads gelegten Querschnitt rautenförmig sind; bei dieser Ausbildung ist eine sehr dichte Belegung der Padunterseite mit hinterschnittenen Vorsprüngen möglich, was zu einer hervorragenden Verzahnung mit dem Klebstoff führt. Die Verzahnung ist dadurch besonders wirksam, daß die Hinterschnitte von Reihe zu Reihe unterschiedlich orientiert sind. Es wird deshalb bevorzugt, daß die Vorsprünge in einer Reihe untereinander gleich und spiegelbildlich gleich den Vorsprüngen in der bzw. den benachbarten beiden Reihen sind; der Aufbau aus gleichen bzw. spiegelbildlich gleichen Vorsprüngen erleichtert den Aufbau der Spritzgießform, wobei die spiegelbildliche Orientierung der Hinterschnitte zu einer besonders guten Verzahnung mit dem Klebstoff führt.

In Weiterbildung der Erfindung sind an den gespritzten Teilen vorzugsweise Fortsätze vorgesehen, die sich in Richtung senkrecht zur Okklusalebene erstrecken und durch eine Sollbruchstelle mit dem Aufnahme- und Führungsteil verbunden sind. Diese Fortsätze, die ohne weiteres mit angespritzt sein können, können als Setzhilfe dienen, welche die Ausrichtung der Teile auf die Zahnachse erleichtern, indem sie anzeigen, wie die Zahnachse relativ zum Bracket oder Bukkalröhrchen verlaufen sollte. Ist das Teil auf den Zahn ausgerichtet und der Kleber ausgehärtet, kann man die Vorsprünge einfach abreißen oder abbrechen oder abscheren. Gegenüber herkömmlichen Setzhilfen, die aufgedruckt sind, haben sie den Vorteil, entfernbar zu sein, ohne daß sie vorzeitig abgewischt werden können. Gegenüber herkömmlichen Setzhilfen, die in die im Bracket ohnehin vorgesehenen Schlitze eingedrückt werden, haben sie den Vorteil, daß sie kein gesondertes Teil sind und beim Setzen des Brackets nicht erst in dessen Schlitz eingedrückt werden müssen. Erfindungsgemäße Brackets haften so gut auf Zähnen, daß mit Drahtbögen so starke Spannkräfte ausgeübt werden können, daß selbst ein so fester Kunststoff wie PAEK zu kriechen beginnen kann. Zur Weiterbildung der Erfindung ist deshalb vorzugsweise vorgesehen, für hohe Spannkräfte den Schlitz, der zum Aufnehmen des Drahtbogens bestimmt ist, zu verstärken durch einen Einsatz aus Keramik oder Metall, welcher eingeklebt werden könnte, vorzugsweise aber mit eingespritzt wird, am besten so, daß seine äußeren Ränder von Kunststoff überdeckt werden, so daß sich ein Formschluß ergibt. Außerdem fällt der Einsatz dann optisch nicht auf.

Werden solche Einsätze nicht vorgesehen, kann man mit Vorteil im oberen Bereich des Schlitzes Noppen oder dergl. Vorsprünge anspritzen, hinter welche der Drahtbogen einrasten kann.

Die Erfindung schließt die Herstellung von Zahnreguliervorrichtungen ein, welche nicht aus Kunststoff, sondern aus einem anderen spritzgießfähigen Werkstoff bestehen. Dazu gehören die Werkstoffe, welche sich pulvermetallurgisch verarbeiten lassen, z.B. Aluminiumoxid.

Ausführungsbeispiele der Erfindung sind in den beigefügten Zeichnungen dargestellt.
- Figur 1: zeigt ein Bracket gemäß den Ansprüchen 3 und 4, in der Ansicht auf seine Unterseite,
- Figur 2: zeigt den Schnitt A-B durch das Bracket,
- Figur 3: zeigt den Schnitt C-D durch das Bracket,
- Figur 4: zeigt den Schnitt E-F durch das Bracket,
- Figur 5: zeigt ein anderes Bracket gemäß Anspruch 4 in einer Seitenansicht mit schwalbenschwanzförmigen Vorsprüngen,
- Figur 6: zeigt das Bracket aus Figur 5 in Draufsicht,
- Figur 7: zeigt das Bracket aus Figur 5 in einer anderen Seitenansicht, und die
- Figuren 8-10: zeigen ein weiteres Bracket gemäß Anspruch 4 in drei Ansichten entsprechend den Figuren 5-7 mit Vertiefungen in der Paduntereite und mit verstärktem Schlitz.

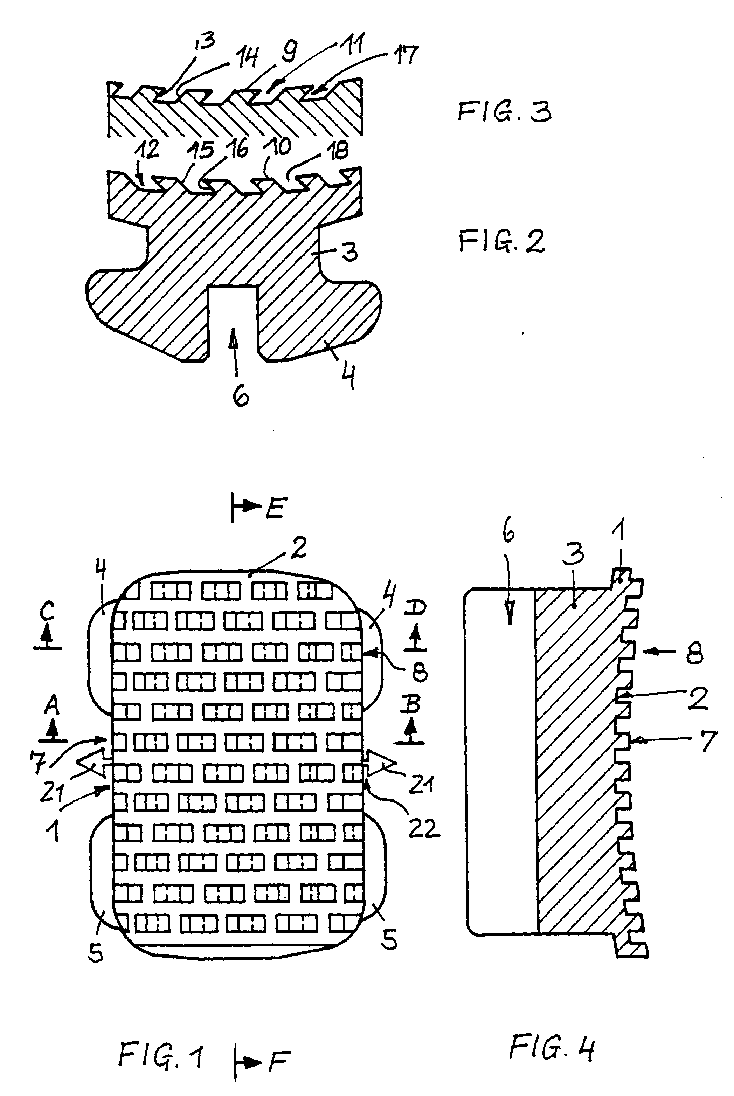

Das in den Figuren 1-4 dargestellte Bracket hat ein Pad 1 mit konkaver Unterseite 2. Auf der Oberseite des Pads 1 steht ein zweiflügeliges Aufnahme- und Führungsteil 3 mit einem die beiden Flügel 4 und 5 durchsetzenden Schlitz 6, in welchen ein zu spannender Drahtbogen eingelegt werden kann.

An der Unterseite 2 des Pads 1 befinden sich zwölf zueinander parallele Reihen von Vorsprüngen, von denen zwei Reihen beispielhaft im Schnitt dargestellt sind, nämlich die Reihe 7 in Figur 2, und die Reihe 8 in Figur 3. Mit Ausnahme der am Rand stehenden Vorsprünge sind die Vorsprünge in den jeweiligen Reihen untereinander gleich, nämlich rautenförmig (siehe die Figuren 2 und 3), wobei die Vorsprünge 9 in der Reihe 7 spiegelbildlich zu den Vorsprüngen 10 in der Reihe 8 orientiert sind. Auf diese Weise sind die Vorsprünge einer Reihe stets spiegelbildlich orientiert zu den Vorsprüngen in den Nachbarreihen.

Wichtiger als die gleiche oder spiegelbildlich gleiche Ausbildung der Vorsprünge 9 und 10 ist die gleiche bzw. spiegelbildlich gleiche Ausbildung der Lücken 11 bzw. 12 zwischen je zwei Vorsprüngen 9 bzw. 10 in jener Reihe. Durch die rautenförmige Ausbildung der Vorsprünge 9 und 10 haben die Lücken 11 und 12 eine entsprechend komplementäre Gestalt. Die Randflächen 13 und 14 bzw. 15 und 16 der Vorsprünge, welche die Lücken 11 bzw. 12 begrenzen, sollten parallel zueinander verlaufen oder sich zur leichteren Entformbarkeit nach aussen hin ein wenig erweitern. Dadurch haben die Lücken 11 und 12 eine vorgegebene Orientierung schräg zur Unterseite 2 des Pads, und mit diesen beiden von Reihe zu Reihe abwechselnden Orientierungen können in einer Spritzgießform für das Spritzen des Brackets vorgesehene Schieber in den Formenhohlraum eintauchen und beim Spritzen des Brackets die Lücken 11 und 12 zwischen den Vorsprüngen 9 und 10 freihalten, die infolge der schrägen Orientierung einen einseitigen Hinterschnitt 17 bzw. 18 zur Folge haben, der beim Aufkleben des Brackets auf einen Zahn für eine wirksame mechanische Verzahnung mit dem Klebstoff sorgt.

In der Mitte zwischen den beiden Flügeln 4 und 5 sind am Pad 1 zwei in entgegengesetzte Richtungen weisende Fortsätze 20 und 21 vorgesehen, die über eine Sollbruchstelle 22 mit dem Pad verbunden sind. Diese Fortsätze 20 und 21 dienen als Setzmarken, die nach dem korrekten Ausrichten des Brackets auf die Zahnachse abgebrochen werden können. Verleiht man den Vorsprüngen 9, 10 anstelle einer rautenförmigen Gestalt eine T- oder L-förmige Gestalt, kommt man zu einem Bracket gemäß Anspruch 1 bzw. 2.

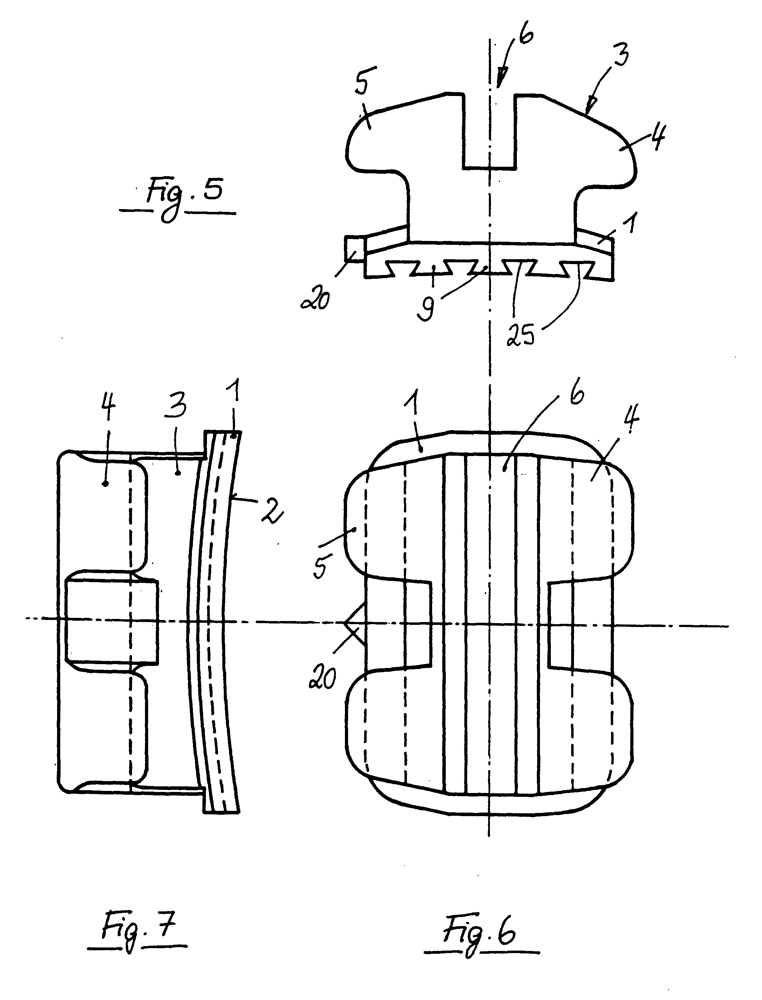

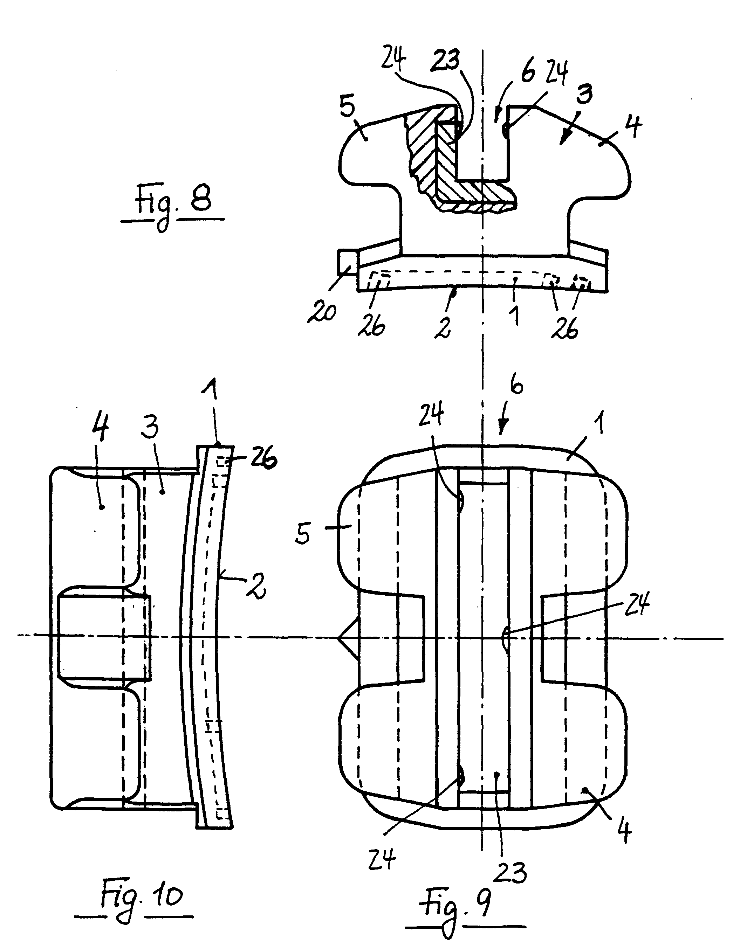

In den weiteren Ausführungsbeispielen sind Elemente, die solchen im ersten Beispiel entsprechen, mit übereinstimmenden Bezugszahlen bezeichnet.
Das in den Figuren 5-7 dargestellte Bracket unterscheidet sich von dem in den Figuren 1-4 dargestellten Bracket i.W. darin, daß zur mechanischen Verzahnung mit einem Klebstoff die Padunterseite gerade verlaufende, schwalbenschwanzförmige Vorsprünge 9 hat, die durch schwalbenschwanzförmige Schieber in der Spritzgießform gebildet werden können, die in der Unterseite des Pads entsprechend geformte Nuten 25 hinterlassen.
Das in den Figuren 8-10 dargestellte Bracket hat Sacklöcher 26 in der Unterseite des Pads 1, welche durch schräg zur Unterseite des Pads 1 orientierte Schieber der Spritzgießform gebildet werden. An den Seitenansichten der Fig. 8 und Fig. 10 sind sie nicht sichtbar und daher nur gestrichelt angedeutet. Femer hat das Bracket zur Verstärkung des Schlitzes 6 einen Einsatz 23 aus Titan oder Keramik. Die äußeren Kanten des umspritzten Einsatzes 23 sind vom Kunststoff überdeckt. Der Einsatz hat einwärts gerichtete Vorsprünge 24, hinter welche ein Drahtbogen in den Schlitz 6 eingerastet werden kann. Solche Vorsprünge 24 können bei den vorhergehenden Beispielen dem Bracket bereits angespritzt werden.

Die Erfindung ist nicht nur auf Brackets anwendbar, sondern auf alle Arten von der Zahnkorrektur dienenden Teilen, die in ähnlicher Weise mit Hilfe eines Pads auf den Zahn geklebt werden.

## Patentansprüche

1. Durch Spritzgießen aus Kunststoff oder anderen spritzgießfähigen Werkstoffen hergestellte Vorrichtung zum Regulieren der Zahnstellung, insbesondere Bracket oder Bukkalröhrchen, mit einem Fußteil (Pad 1), welches eine konkave Unterseite (2) zum Aufkleben auf die Vorderseite eines Zahnes und eine Oberseite hat, auf der ein einstückig mit dem Pad (1) gespritztes Aufnahmeund Führungsteil (3) für einen Drahtbogen steht,
wobei an der Unterseite (2) des Pads (1) durch das Spritzgießen hinterschnitten geformte Vorsprünge (9, 10) vorgesehen sind,
**dadurch gekennzeichnet, daß** zur Bildung der Hinterschnitte die Vorsprünge (9, 10) in Reihen angeordnet sind und die Lücken zwischen je zwei Vorsprüngen (9, 10) in je einer Reihe gleich und je von Reihe zu Reihe unterschiedlich orientiert sind.

2. Vorrichtung nach Anspruch 1, **dadurch gekennzeichnet, daß** die Vorsprünge (9, 10) nicht mehr als 0,5 mm vorspringen.

3. Vorrichtung nach Anspruch 1, **dadurch gekennzeichnet, daß** die Vorsprünge (9, 10) nicht mehr als 0,3 mm vorspringen.

4. Vorrichtung nach Anspruch 1, 2 oder 3, **dadurch gekennzeichnet, daß** die Vorsprünge (9, 10) in geraden, zueinander parallelen Reihen angeordnet sind.

5. Vorrichtung nach einem der Ansprüche 1 bis 4, **dadurch gekennzeichnet, daß** die Vorsprünge (9, 10) T-förmig sind.

6. Vorrichtung nach einem der Ansprüche 1 bis 4, **dadurch gekennzeichnet, daß** die Vorsprünge (9, 10) hakenförmig, insbesondere L-förmig sind.

7. Vorrichtung nach einem der Ansprüche 1 bis 4, **dadurch gekennzeichnet, daß** die Vorsprünge (9, 10) im senkrecht zur Unterseite des Pads (1) gelegten Querschnitt trapezförmig sind.

8. Vorrichtung nach einem der Ansprüche 1 bis 4, **dadurch gekennzeichnet, daß** die Vorsprünge (9, 10) im senkrecht zur Unterseite des Pads (1) gelegten Querschnitt rautenförmig sind.

9. Vorrichtung nach einem der Ansprüche 6 bis 8, **dadurch gekennzeichnet, daß** die Vorsprünge (9, 10) untereinander gleich oder spiegelbildlich gleich sind.

10. Vorrichtung nach Anspruch 4 und 9, **dadurch gekennzeichnet, daß** die Vorsprünge (9, 10) in einer Reihe (7, 8) untereinander gleich oder spiegelbildlich gleich den Vorsprüngen (8, 7) in der bzw. den benachbarten beiden Reihen (8, 7) sind.

11. Durch Spritzgießen aus Kunststoff oder anderen spritzgießfähigen Werkstoffen hergestellte Vorrichtung zum Regulieren der Zahnstellung, insbesondere Bracket oder Bukkalröhrchen, mit einem Fußteil (Pad 1), welches eine konkave Unterseite (2) zum Aufkleben auf die Vorderseite eines Zahnes und eine Oberseite hat, auf der ein einstückig mit dem Pad (1) gespritztes Aufnahmeund Führungsteil (3) für einen Drahtbogen steht,
wobei an der Unterseite (2) des Pads (1) durch das Spritzgießen hinterschnitten geformte Vertiefungen (26) vorgesehen sind,
**dadurch gekennzeichnet, daß** die Vertiefungen (26) in Reihen angeordnet sind und je in einer Reihe gleich und je von Reihe zu Reihe unterschiedlich orientiert sind.

12. Vorrichtung nach Anspruch 1 oder 4, **dadurch gekennzeichnet, daß** die Vertiefungen Sacklöcher (26) mit unterschiedlichen Orientierungen sind, wobei die in einer gemeinsamen Reihe liegenden Sacklöcher (26) gleich orientiert sind.

13. Vorrichtung nach Anspruch 11, **dadurch gekennzeichnet, daß** die Vertiefungen (26) höchstens 0,5 mm tief sind.

14. Vorrichtung nach Anspruch 11, **dadurch gekennzeichnet, daß** die Vertiefungen (26) höchstens 0,3 mm tief sind.

15. Vorrichtung nach Anspruch 11, **dadurch gekennzeichnet, daß** die Vertiefungen (26) in geraden, zueinander parallelen Reihen angeordnet sind.

16. Vorrichtung nach einem der vorstehenden Ansprüche, **dadurch gekennzeichnet, daß** das Aufnahme- und Führungsteil (3) einen zum Aufnehmen des Drahtbogens bestimmten Schlitz (6) hat, der durch einen Einsatz (23) aus Metall oder Keramik ausgekleidet ist.

17. Vorrichtung nach Anspruch 16, **dadurch gekennzeichnet, daß** der Einsatz (23) an seinen äußeren Rändern von Kunststoff bedeckt ist.

18. Vorrichtung nach einem der Ansprüche 1-12, **dadurch gekennzeichnet, daß** das Aufnahme- und Führungsteil (3) einen zum Aufnehmen des Drahtbogens bestimmten Schlitz (6) hat, der im oberen Bereich angespritzte Vorsprünge (24) hat.

19. Vorrichtung nach einem der vorstehenden Ansprüche, **dadurch gekennzeichnet, daß** sie aus einem Polyaryletherketon oder aus einem Azetalharz, insbesondere aus einem Polyoximethylenhomopolymer besteht.

20. Vorrichtung nach Anspruch 19, **dadurch gekennzeichnet, daß** der Kunststoff ein weißes Pigment, insbesondere TiO₂-Pulver, enthält.

21. Vorrichtung nach einem der vorstehenden Ansprüche, **gekennzeichnet durch** in Richtung senkrecht zur Okklusalebene sich erstreckende Fortsätze (20, 21), welche **durch** eine Sollbruchstelle (22) mit dem Aufnahme- und Führungsteil (3) oder dem Pad (2) verbunden sind.

22. Anwendung des Spritzgießens in einer mit Schiebern ausgerüsteten Spritzgießform zum Herstellen von Vorrichtungen zum Regulieren der Zahnstellung aus einem spritzgießfähigen Werkstoff, welche an der konkaven Unterseite (2) eines zum Aufkleben auf die Vorderseite eines Zahnes bestimmten Fußteils (Pad 1) durch das Spritzgießen mit Hilfe der Schieber hinterschnitten geformte Vorsprünge (9, 10) oder Vertiefungen erhalten, wobei die Schieber in Reihen angeordnet sind und mit von Reihe zu Reihe abwechselnden Orientierungen in den Formenhohlraum eintauchen.

23. Verfahren nach Anspruch 22, in welchem die Schieber schräg zur Unterseite des Pads in den Formenhohlraum eintauchen.

24. Verfahren nach Anspruch 22, in welchem die Schieber zum Bilden von T-förmigen oder hakenförmigen, insbesondere L-förmigen Vorsprüngen (9, 10) parallel zur Unterseite (2) des Pads (1) verlaufen.

## Claims

1. Device for adjusting the position of a tooth, made by injection moulding from a plastic material or other injection-mouldable materials, in particular a bracket or buccal tube, having a pad (1) which has a concave underside (2) for adhesive bonding onto the front surface of a tooth and an upper side on which is located a support and guide element (3), moulded integrally with the pad (1), for an arch wire,
with undercut projections (9, 10), formed by the injection-moulding process, being arranged on the underside (2) of the pad (1),
**characterised in that** for forming the undercuts the projections (9, 10) are arranged in rows and the gaps between every two projections (9, 10) of each row are equal by oriented and are oriented differently from one row to the next.

2. The device as defined in Claim 1, **characterised in that** the projections (9, 10), project by maximally 0.5 mm.

3. The device as defined in Claim 1, **characterised in that** the projections (9, 10), project by maximally 0.3 mm.

4. The device as defined in Claim 1, 2 or 3, **characterised in that** the projections (9, 10) are arranged in straight rows parallel one to the other.

5. The device as defined in any of Claims 1 to 4, **characterised in that** the projections (9, 10) are T-shaped.

6. The device as defined in any of Claims 1 to 4, **characterised in that** the projections (9, 10) are hook-shaped, in particular L-shaped.

7. The device as defined in any of Claims 1 to 4, **characterised in that** the projections (9, 10) are trapezoidal in shape, as regards their cross-section perpendicular to the underside of the pad (1).

8. The device as defined in any of Claims 1 to 4, **characterised in that** the projections (9, 10) are rhomb-shaped, as regards their cross-section perpendicular to the underside of the pad (1).

9. The device as defined in any of Claims 6 to 8, **characterised in that** the projections (9, 10) are identical or mirrored in shape one relative to the other.

10. The device as defined in Claims 4 and 9, **characterised in that** the projections (9, 10) in one row (7, 8) are identical or mirrored in shape relative to the projections (8, 7) in the neighbouring row or the neighbouring two rows (8, 7).

11. Device for adjusting the position of a tooth, made by injection moulding from a plastic material or other injection-mouldable materials, in particular a bracket or buccal tube, having a pad (1) which has a concave underside (2) for adhesive bonding onto the front surface of a tooth and an upper side on which is located a support and guide element (3), moulded integrally with the pad (1), for an arch wire,
with undercut recesses (26), formed by the injection-moulding process, being arranged on the underside (2) of the pad (1),
**characterised in that** the recesses (26) are arranged in rows and are oriented identically in each row and differently from one row to the next.

12. The device as defined in Claim 1 or 4, **characterised in that** the recesses are differently oriented blind holes (26), the blind holes (26), that are arranged in a common row, having the same orientation.

13. The device as defined in Claim 11, **characterised in that** the recesses (26) are maximally 0.5 mm deep.

14. The device as defined in Claim 11, **characterised in that** the recesses (26) are maximally 0.3 mm deep.

15. The device as defined in Claim 11, **characterised in that** the recesses (26) are arranged in straight rows parallel one to the other.

16. The device as defined in any of the preceding claims, **characterised in that** the support and guide element (3) is provided with a slot (6), lined with an insert (23) made from metal or a ceramic material, which is intended for receiving the arch wire.

17. The device as defined in Claim 16, **characterised in that** the insert (23) is covered with plastic at its outer edges.

18. The device as defined in any of Claims 1 to 12, **characterised in that** the support and guide element (3) is provided with a slot (6), provided with integrally formed injection-moulded projections (24) in its upper area, which is intended for receiving the arch wire.

19. The device as defined in any of the preceding claims, **characterised in that** it consists of polyarylether ketone or an acetal resin, in particular of a polyoximethylene homopolymer.

20. The device as defined in Claim 19, **characterised in that** the plastic material contains a white pigment, in particular TiO₂ powder.

21. The device as defined in any of the preceding claims, **characterised by** prolongations (20, 21) extending in a direction perpendicular to the occlusion plane, which are connected with the support and guide element (3) or the pad (2) via a rupture joint.

22. Use of the injection-moulding process in an injection mould equipped with slides for the production of devices, made from an injection-mouldable material, for adjusting the position of a tooth where the concave underside (2) of a pad (1) intended for adhesive bonding onto the front surface of a tooth, is provided, by the injection-moulding process using the slides, with undercut projections (9, 10) or recesses, the slides being arranged in rows and plunging into the mould cavity in orientations that vary from one row to the next.

23. The method as defined in Claim 22, where the slides plunge into the mould cavity obliquely relative to the underside of the pad.

24. The method as defined in Claim 22, where the slides extend in parallel to the underside (2) of the pad (1) for forming T-shaped or hook-shaped, in particular L-shaped, projections (9, 10).

## Revendications

1. Dispositif fabriqué par moulage par injection, constitué dune matière synthétique ou d'un autre matériau apte au moulage par injection et destiné à la régulation de la position des dents, en particulier crochet ou tubulure buccale, comprenant une partie de base (plaquette 1) qui possède un côté inférieur concave (2) destiné à être collé sur le côté antérieur d'une dent et un côté supérieur sur lequel est disposée une partie de réception et de guidage (3) moulée en une seule pièce par injection avec la plaquette (1), destinée à un arc en fil métallique, dans lequel on prévoit, sur le côté inférieur (2) de la plaquette (1), des saillies (9, 10) sur lesquelles sont façonnées des saillies (9, 10) du type à contre-dépouilles par moulage par injection, **caractérisé en ce que**, pour la formation des contre-dépouilles, les saillies (9, 10) sont disposées par rangs et les interstices entre respectivement deux saillies (9, 10) sont orientés dans la même direction dans respectivement un rang et dans des directions différentes respectivement d'un rang à l'autre.

2. Dispositif selon la revendication 1, **caractérisé en ce que** les saillies (9, 10) ne font pas saillie sur une distance supérieure à 0,5 mm.

3. Dispositif selon la revendication 1, **caractérisé en ce que** les saillies (9, 10) ne font pas saillie sur une distance supérieure à 0,3 mm.

4. Dispositif selon la revendication 1, 2 ou 3, **caractérisé en ce que** les saillies (9, 10) sont disposées en rangs rectilignes réciproquement parallèles.

5. Dispositif selon l'une quelconque des revendications 1 à 4, **caractérisé en ce que** les saillies (9, 10) sont en forme de T.

6. Dispositif selon l'une quelconque des revendications 1 à 4, **caractérisé en ce que** les saillies (9, 10) sont en forme de crochet, en particulier en forme de L.

7. Dispositif selon l'une quelconque des revendications 1 à 4, **caractérisé en ce que** les saillies (9, 10) présentent la forme d'un trapèze dans la coupe transversale perpendiculaire au côté inférieur de la plaquette (1).

8. Dispositif selon l'une quelconque des revendications 1 à 4, **caractérisé en ce que** les saillies (9, 10) présentent la forme d'un losange dans la coupe transversale perpendiculaire au côté inférieur de la plaquette (1).

9. Dispositif selon l'une quelconque des revendications 6 à 8, **caractérisé en ce que** les saillies (9, 10) sont réciproquement égales ou symétriquement égales.

10. Dispositif selon les revendications 4 et 9, **caractérisé en ce que** les saillies (9, 10) sont réciproquement égales dans un rang (7, 8) ou bien sont symétriquement égales aux saillies (8, 7) dans le rang, respectivement dans les deux rangs voisins (8, 7).

11. Dispositif fabriqué par moulage par injection, constitué d'une matière synthétique ou d'un autre matériau apte au moulage par injection et destiné à la régulation de la position des dents, en particulier crochet ou tubulure buccale, comprenant une partie de base (plaquette 1) qui possède un côté inférieur concave (2) destiné à être collé sur le côté antérieur d'une dent et un côté supérieur sur lequel est disposée une partie de réception et de guidage (3) moulée en une seule pièce par injection avec la plaquette (1), destinée à un arc en fil métallique, dans lequel on prévoit, sur le côté inférieur (2) de la plaquette (1), des renfoncements (26) du type à contre-dépouilles réalisés à l'aide du moulage par injection, **caractérisé en ce que** les renfoncements (26) sont disposés par rangs et sont orientés dans la même direction dans respectivement un rang et dans des directions différentes respectivement d'un rang à l'autre.

12. Dispositif selon la revendication 1 ou 4, **caractérisé en ce que** les renfoncements sont des trous borgnes (26) possédant des orientations différentes, dans lequel, les trous borgnes (26) disposés dans un rang commun sont orientés dans la même direction.

13. Dispositif selon la revendication 11, **caractérisé en ce que** la profondeur des renfoncements (26) n'est pas supérieure à 0,5 mm.

14. Dispositif selon la revendication 11, **caractérisé en ce que** la profondeur des renfoncements (26) n'est pas supérieure à 0,3 mm.

15. Dispositif selon la revendication 11, **caractérisé en ce que** les renfoncements (26) sont disposés en rangs rectilignes réciproquement parallèles.

16. Dispositif selon l'une quelconque des revendications précédentes, **caractérisé en ce que** la partie de réception et de guidage (3) possède une fente (6) destinée à la réception de l'arc en fil métallique, ladite fente étant équipée d'une pièce rapportée (23) en métal ou en matière céramique.

17. Dispositif selon la revendication 16, **caractérisé en ce que** la pièce rapportée (23) est recouverte sur ses bords externes d'une matière synthétique.

18. Dispositif selon l'une quelconque des revendications 1 à 12, **caractérisé en ce que** la partie de réception et de guidage (3) possède une fente (6) destinée à la réception de l'arc en fil métallique, ladite fente possédant des saillies (24) moulées par injection dans sa zone supérieure.

19. Dispositif selon Tune quelconque des revendications précédentes, **caractérisé en ce qu'**il est constitué d'une polyaryléthercétone ou d'une résine acétal, en particulier d'un homopolymère de polyoxyméthylène.

20. Dispositif selon la revendication 19, **caractérisé en ce que** la matière synthétique contient un pigment blanc, en particulier de la poudre de dioxyde de titane.

21. Dispositif selon l'une quelconque des revendications précédentes, **caractérisé par** des saillies (20, 21) s'étendant dans une direction perpendiculaire au plan occlusal, qui sont reliées via un point destiné à la rupture (22) à la partie de réception et de guidage (3) ou à la plaquette (2).

22. Utilisation du moulage par injection, dans un moule de moulage par injection équipé de coulisseaux, pour la fabrication de dispositifs destinés à la régulation de la position des dents et constitués d'un matériau apte au moulage par injection, dispositifs auxquels on confère, sur le côté inférieur concave 2 d'une partie de base (plaquette 1) destinée à être collée sur le côté avant d'une dent, des saillies (9, 10) ou des renfoncements sur lesquels on obtient des contre-dépouilles via le moulage par injection à l'aide des coulisseaux, les coulisseaux étant disposés par rangs et pénétrant dans l'espace creux du moule avec des orientations alternant d'un rang à l'autre.

23. Procédé selon la revendication 22, dans lequel les coulisseaux pénètrent dans l'espace creux du moule en inclinaison par rapport au côté inférieur de la plaquette.

24. Procédé selon la revendication 22, dans lequel les coulisseaux s'étendent parallèlement au côté inférieur (2) de la plaquette (1) pour former des saillies (9, 10) en forme de T ou en forme de crochet, en particulier en forme de L.
